# EUROPÄISCHE PATENTSCHRIFT

(11) **EP 3 151 405 B1**
(45) Veröffentlichungstag und Bekanntmachung des Hinweises auf die Patenterteilung: **03.04.2019**
(21) Anmeldenummer: 15187517.6
(22) Anmeldetag: 30.09.2015
(51) Int. Cl.: H02M 1/36, H02M 1/32, H02M 1/00

(54) **SCHALTUNG ZUR SYMMETRIERUNG VON KONDENSATORSPANNUNGEN AN KONDENSATOREN IN EINEM GLEICHSPANNUNGSKREIS**
CIRCUIT FOR BALANCING THE VOLTAGES OF DC-LINK CAPACITORS
CIRCUIT D'ÉQUILIBRAGE DES TENSIONS AUX BORNES DES CONDENSATEURS D'UN CIRCUIT INTERMÉDIAIRE À COURANT CONTINU

(43) Veröffentlichungstag der Anmeldung: 05.04.2017
(73) Patentinhaber: Siemens Aktiengesellschaft, 80333 München (DE)
(72) Erfinder: Jänicke, Peter, 90765 Fürth (DE); Eckert, Melanie, 90409 Nürnberg (DE); Frühauf, Markus, 91080 Uttenreuth (DE)

(56) Entgegenhaltungen:
- EP-A1- 2 541 748
- EP-A2- 1 315 276
- EP-A2- 2 709 259
- CN-U- 202 261 004
- JP-A- H10 295 081
- JP-A- 2003 088 144
- JP-A- 2008 301 623
- US-A- 5 682 022
- MARKUS A VOGELSBERGER ET AL: "Life-Cycle Monitoring and Voltage-Managing Unit for DC-Link Electrolytic Capacitors in PWM Converters", IEEE TRANSACTIONS ON POWER ELECTRONICS, INSTITUTE OF ELECTRICAL AND ELECTRONICS ENGINEERS, USA, Bd. 26, Nr. 2, 27. Februar 2011 (2011-02-27), Seiten 493-503, XP011334719, ISSN: 0885-8993, DOI: 10.1109/TPEL.2010.2059713

## Beschreibung

Die Erfindung betrifft eine Schaltung zur Symmetrierung von Kondensatorspannungen an Kondensatoren in einem Gleichspannungskreis, aufweisend einen ersten Schaltungspfad mit mindestens einem ersten Kondensator und einen zweiten Kondensator, welche in Reihe zwischen einem ersten Potential und einem zweiten Potential des Gleichspannungskreises geschaltet sind, wobei zwischen dem ersten Kondensator und dem zweiten Kondensator ein erster Mittelanschluss ausgebildet ist, und wobei der erste Mittelanschluss über eine erste elektrische Verbindung mit einem zweiten Mittelanschluss in einem zweiten Schaltungspfad verbunden ist.

Elektrische Baugruppen weisen für die Energieversorgung und die Energieverteilung ihrer elektrischen Bauteile oftmals verschiedene Spannungen und Spannungsebenen auf. Beispielsweise ist es für elektrische Umrichter mit einem Gleichspannungskreis oder mit einem Gleichspannungszwischenkreis oftmals systemimmanent notwendig, mittels einer Zwischenspeicherung von elektrischer Energie die Gleichspannung je nach Betriebsart und Betriebspunkt am Gleichspannungskreis sicher bereitzustellen oder sicher abzubauen.

Als Energiezwischenspeicher für die oft dynamischen Zwischenspeicherungs- und Entladungsvorgänge am Gleichspannungskreis eignen sich besonders Kondensatoren aufgrund ihrer bekannten elektrischen Eigenschaften. Viele Anwendungen von elektrischen Umrichtern bedingen hohe Gleichspannungen am Gleichspannungskreis, welche bis zu 800V und mehr betragen können. Da die Arbeitsspannungen der geeigneten und aus wirtschaftlicher Sicht verfügbaren Kondensatoren begrenzt ist, müssen häufig zwei oder mehr Kondensatoren am Gleichspannungskreis in Reihe geschaltet werden, damit sie mit der Gleichspannung des Gleichspannungskreises betrieben werden können.

Kondensatoren haben insbesondere für den Normalbetrieb am Gleichspannungskreis die unerwünschte Eigenschaft, sich aufgrund baulicher und materialbedingter Auslegungen und Toleranzen über einen meist individuellen Zeitraum selbsttätig zu entladen. Bei diesem Vorgang fließt ein sogenannter Leckstrom, oder auch Reststrom genannt, über einen Leckwiderstand des Kondensators, wobei sich die Ladung des Kondensators, also auch die Spannung über dem Kondensator abbaut.

In diesem Kontext ist unter Normalbetrieb ein Betriebszustand der elektrischen Baugruppe also insbesondere auch des elektrischen Umrichters zu verstehen, bei dem keine vom Anwender oder vom Anwendungsprozess initiierte Abschaltung der Energieverteilung bzw. der Energieversorgung für den Gleichspannungskreis aktiviert ist.

Da sich die Leckströme der Kondensatoren aufgrund der schon erwähnten Toleranzen im Allgemeinen unterscheiden, und somit eine unzulässig hohe Kondensatorspannung an den in Reihenschaltung am Gleichspannungskreis verbundenen Kondensatoren auftreten kann, welche einen geringeren oder keinen Leckstrom aufweisen, soll eine Beschädigung oder Zerstörung dieser Kondensatoren verhindert werden.

Eine bekannte Lösung zur Symmetrierung der Kondensatoren am Gleichspannungskreis ist die Einbringung von mindestens zwei elektrischen Widerständen in einer weiteren Reihenschaltung am Gleichspannungskreis, welche parallel zur Reihenschaltung der Kondensatoren angeordnet ist. In jeder dieser Reihenschaltungen wird jeweils zwischen zwei Kondensatoren und zwei Widerständen ein Mittelanschluss gebildet, welche miteinander elektrisch verbunden sind.

Diese einfache Form einer Symmetrierschaltung übernimmt nun die Symmetrierung der Kondensatorspannungen im Normalbetrieb. Sie ist jedoch auch geeignet, nach Abschaltung des elektrischen Umrichters, und somit Unterbrechung der Energieversorgung für den Gleichspannungskreis, die Kondensatoren möglichst schnell und sicher zu entladen. Ein entscheidender Nachteil dieser Lösung ist die Tatsache, dass in den elektrischen Widerständen der weiteren Reihenschaltung am Gleichspannungskreis während des Normalbetriebs permanent Querströme fließen, auch wenn eine Symmetrierung der Kondensatorspannungen zeitweise nicht notwendig ist. Somit werden zum Teil erhebliche elektrische Verluste erzeugt, welche den Gesamtwirkungsgrad des elektrischen Umrichters verringern.

Die EP 2 584 686 A1 lehrt eine Schaltung und ein Verfahren zur Symmetrierung von am Gleichspannungskreis in Reihe geschalteten Kondensatoren mit einem Mittelanschluss zwischen den Kondensatoren, welche insbesondere die elektrischen Verluste der eingangs beschriebenen Symmetrierschaltung vermeiden soll. Diese Aufgabe wird im Wesentlichen dadurch gelöst, dass eine weitere Reihenschaltung am Gleichspannungskreis, bestehend aus zwei Schaltelementen, der Reihenschaltung aus Kondensatoren parallelgeschaltet ist, sowie der Mittelanschluss an den Kondensatoren und ein weiterer Mittelanschluss zwischen dem ersten und dem zweiten Schaltelement über eine Induktivität verbunden sind. Bei einer Spannungsüberhöhung am ersten oder am zweiten Kondensator ist eine Pulsfrequenz an das erste bzw. das zweite Schaltelement anlegbar und der erste oder der zweite Kondensator ist während einer jeweiligen Pulsdauer über die Induktivität und das jeweilige Schaltelement partiell entladbar.

Einfach gesagt wird mittels der Induktivität und den Schaltelementen die überschüssige Energie zwischen den Kondensatoren "hin- und hergeschoben". Eine Regelungseinheit ermittelt dabei die Spannung über den Kondensatoren. Je nach Spannungsunterschied wird das entsprechende Schaltelement mittels Pulsweitenmodulation (PWM) angesteuert und die überschüssige Energie über die Induktivität verschoben.

Diese Art der Symmetrierung funktioniert jedoch nur für eine Kondensatorbank mit mindestens zwei Reihenschaltungen von Kondensatoren am Gleichspannungskreis. Auch ist diese Lösung technisch aufwendig gestaltet, da für die PWM zumindest eine Regelungseinheit mit einem Prozessor vorgesehen ist und sich die Symmetrierschaltung ohne den Prozessor für die PWM nicht auslegen lässt.

Der Erfindung liegt die Aufgabe zugrunde, eine Schaltung sowie ein Verfahren zur Symmetrierung von Kondensatorspannungen für zwischen den Potentialen am Gleichspannungskreis in einer Reihenschaltung angeordnete Kondensatoren vorzuschlagen, welche selbststeuernd auslegbar ist, eine geringe Verlustleistung erzeugt und somit technisch und wirtschaftlich effizient einsetzbar ist.

Diese Aufgabe wird durch eine Schaltung mit den im Anspruch 1 angegebenen Merkmalen gelöst.

Diese Aufgabe wird weiterhin durch ein Verfahren nach Anspruch 10 gelöst.

Der Erfindung liegt die Erkenntnis zugrunde, dass bei Kondensatoren einer Reihenschaltung am Gleichspannungskreis in unterschiedlichem Maße Leckströme auftreten, welche zu einer ungleichmäßigen Aufteilung von Kondensatorspannungen über den einzelnen Kondensatoren bzgl. der am Gleichspannungskreis anliegenden Gleichspannung führt. Dabei soll der Kondensator, welcher den jeweils größeren Leckstrom führt, bedarfsgerecht aufgeladen werden, bis eine Symmetrie der Kondensatorspannungen annähernd hergestellt ist, ohne dass unnötige elektrische Verluste auftreten bzw. eine technisch aufwendige Lösung dafür notwendig ist.

Für die Lösung der Aufgabe wird daher eine Schaltung zur Symmetrierung von Kondensatorspannungen an Kondensatoren in einem Gleichspannungskreis vorgeschlagen, aufweisend einen ersten Schaltungspfad mit mindestens einem ersten Kondensator und einen zweiten Kondensator, welche in Reihe zwischen einem ersten Potential und einem zweiten Potential des Gleichspannungskreises geschaltet sind, wobei zwischen dem ersten Kondensator und dem zweiten Kondensator ein erster Mittelanschluss ausgebildet ist, aufweisend einen zweiten Schaltungspfad mit einem ersten schaltbaren Halbleiter, einem ersten Symmetrierwiderstand, einem zweiten Symmetrierwiderstand und einem zweiten schaltbaren Halbleiter, welche in Reihe zwischen den Potentialen geschaltet sind, wobei der erste schaltbare Halbleiter am ersten Potential und der zweite schaltbare Halbleiter am zweiten Potential angeordnet ist, wobei der erste Symmetrierwiderstand und der zweite Symmetrierwiderstand zwischen dem ersten schaltbaren Halbleiter und dem zweiten schaltbaren Halbeiter angeordnet sind, und wobei zwischen dem ersten Symmetrierwiderstand und dem zweiten Symmetrierwiderstand ein zweiter Mittelanschluss ausgebildet ist, und aufweisend eine erste elektrische Verbindung des ersten Mittelanschlusses im ersten Schaltungspfad mit dem zweiten Mittelanschluss im zweiten Schaltungspfad. Gekennzeichnet ist die Schaltung dadurch, dass in einem dritten Schaltungspfad ein erster Spannungsteilerwiderstand, ein Spannungsstabilisierungs-Element und ein zweiter Spannungsteilerwiderstand zwischen den Potentialen in Reihe geschaltet sind, dass der erste Spannungsteilerwiderstand am ersten Potential, der zweite Spannungsteilerwiderstand am zweiten Potential und das Spannungsstabilisierungs-Element zwischen den Spannungsteilerwiderständen angeordnet sind, dass zwischen dem ersten Spannungsteilerwiderstand und dem Spannungsstabilisierung-Element ein erster Anschluss sowie zwischen dem zweiten Spannungsteilerwiderstand und dem Spannungsstabilisierungs-Element ein zweiter Anschluss ausgebildet ist, dass eine zweite elektrische Verbindung zwischen dem ersten Gate-Anschluss des ersten schaltbaren Halbleiters und dem ersten Anschluss sowie eine dritte elektrische Verbindung zwischen dem weiteren Gate-Anschluss des zweiten schaltbaren Halbleiters und dem zweiten Anschluss eingerichtet ist, dass ein Schaltelement in einer vierten elektrischen Verbindung zwischen dem ersten Anschluss und dem zweiten Anschluss parallel zum Spannungsstabilisierungs-Element angeordnet ist und dass das Spannungsstabilisierung-Element im dritten Schaltungspfad eine Z-Diode ist.

Die Schaltung zeigt eine selbststeuernde Auslegung der Schaltung, so dass auf eine prozessorgestützte Ansteuerung der schaltbaren Halbleiter verzichtet werden kann. Weiterhin ist die Schaltung auch für eine aktive symmetrische Entladung der Kondensatoren am Gleichspannungskreis vorteilhaft einsetzbar.

Ferner erlaubt die vorgeschlagene Schaltung besonders vorteilhaft eine bedarfsgerechte Ladung desjenigen Kondensators des ersten Schaltpfades, welcher die jeweils geringste Kondensatorspannung der Kondensatoren aufweist. Mittels der Symmetrierwiderstände und der schaltbaren Halbleiter ist dabei ein für die bedarfsgerechte Ladung des entsprechenden Kondensators notwendiger Strom erzeugbar.

Der jeweilige schaltbare Halbleiter, welcher für die bedarfsgerechte Ladung des Kondensators mit der niedrigsten Kondensatorspannung nicht benötigt wird, ist oder bleibt elektrisch geöffnet. Wenn die Symmetrierung aufgrund annähernd gleicher Kondensatorspannungen nicht notwendig ist, sind beide schaltbaren Halbleiter so ansteuerbar, dass sie elektrisch geöffnet sind oder bleiben. Somit werden dauerhafte bzw. unnötige elektrische Verluste in der Schaltung zur Symmetrierung der Kondensatorspannungen vermieden.

Die Anzahl der Kondensatoren im ersten Schaltungspfad hat keinen Einfluss auf eine Funktionsfähigkeit und Wirksamkeit der Schaltung zur Symmetrierung der Kondensatorspannungen, soweit mindestens zwei Kondensatoren in Reihe im ersten Schaltungspfad angeordnet sind.

Die Z-Diode kann in Sperrrichtung dauerhaft im Arbeitsbereich ihrer Durchbruchspannung betrieben werden. Im Gegensatz zu einer normalen Diode führt dieser dauerhaft anstehende Arbeitsbereich nicht zur Zerstörung der Z-Diode. Somit kann die Z-Diode ein an den beiden Gate-Anschlüssen der schaltbaren Halbleiter benötigtes Spannungspotential sicherstellen, was die schaltbaren Halbleiter für die aktive symmetrische Entladung im Abschaltmodus der Schaltung in einem linearen Bereich betreibbar macht.

Vorteilhafte Ausgestaltungsformen der Schaltung sind in den abhängigen Ansprüchen angegeben.

Bei einer ersten vorteilhaften Ausgestaltungsform der Schaltung ist ein erster Gate-Anschluss des ersten schaltbaren Halbleiters und ein weiterer Gate-Anschluss des zweiten schaltbaren Halbleiters jeweils in Abhängigkeit eines ersten Leckstroms am ersten Kondensator oder eines zweiten Leckstroms am zweiten Kondensator derart ansteuerbar, dass mittels des ersten schaltbaren Halbleiters und des Symmetriewiderstands ein erster Kondensatorladestrom in den zweiten Kondensator zur Kompensation des zweiten Leckstroms einprägbar ist und mittels des zweiten schaltbaren Halbleiters und des zweiten Symmetriewiderstands ein zweiter Kondensatorladestrom in den ersten Kondensator zur Kompensation des ersten Leckstroms einprägbar ist.

Der Kondensator mit dem jeweils größten Leckstrom weist gegenüber dem verbliebenen Kondensator bzw. den verbliebenen Kondensatoren im ersten Schaltungspfad die geringste Kondensatorspannung auf. Die Schaltung ist derart ausgebildet, dass der Kondensator mit der jeweils geringsten Kondensatorspannung mittels des jeweiligen Kondensatorladestroms aufgeladen wird, so lang, bis sich die Kondensatorspannungen untereinander annähernd symmetrisch zur Gleichspannung am Gleichspannungskreis aufteilen.

Teilweise kann ein Innenwiderstand von schaltbaren Halbleitern an deren Schaltstrecke so beeinflusst werden, dass diese in einem linearen Bereich arbeiten. Der schaltbare Halbleiter, welcher den jeweiligen Kondensatorladestrom zur bedarfsgerechten Ladung für den Kondensator mit der geringsten Kondensatorspannung führen soll, kann somit einen Betriebspunkt einnehmen, bei dem seine Schaltstrecke nicht vollständig öffnet bzw. schließt. Dies beeinflusst die Höhe des Kondensatorladestroms, welcher zur bedarfsgerechten Ladung des jeweiligen Kondensators benötigt wird.

Die Symmetrierwiderstände sind dabei auch zur Stromgegenkopplung verwendet. Werden die schaltbaren Halbleiter im linearen Bereich weiter geöffnet, steigt der Kondensatorladestrom, welcher durch die jeweiligen schaltbaren Halbleiter fließt. Über dem jeweiligen Symmetrierwiderstand fällt so immer mehr Spannung ab. Dadurch nimmt auch eine Gate-Source-Spannung über dem jeweiligen Gate-Anschluss und einem jeweiligen Source-Anschluss der schaltbaren Halbleitern ab, was wiederum den betroffenen Kondensatorladestrom reduziert.

Bei einer weiteren vorteilhaften Ausgestaltungsform der Schaltung ist das Schaltelement ein elektronischer Schalter.

Elektronische Schalter haben den Vorteil, dass mechanische Schaltbewegungen nicht auftreten. Für elektrische Schaltungen sind sie sowohl bzgl. ihrer konstruktiven Eigenschaften, wie Baugröße und Stabilität, aber auch bzgl. ihrer funktionalen Eigenschaften, wie Schaltgeschwindigkeit und Entkoppelbarkeit, mechanischen Schaltern vorzuziehen.

Bei einer weiteren vorteilhaften Ausgestaltungsform der Schaltung ist der elektronische Schalter ein Optokoppler.

Ein Optokoppler hat den Vorteil einer besonders stringenten Entkopplung sowohl aus elektrischer wie auch aus mechanischer Sicht. Er wird gern für eigensichere Schaltungen eingesetzt, da sein Schaltzustand so ausgewählt werden kann, dass im stromlosen Zustand der Schaltung ein sicherer Schaltzustand für beispielsweise einen geöffneten Zustand des Optokopplers annähernd zwangsläufig ist.

Bei einer weiteren vorteilhaften Ausgestaltungsform der Schaltung ist die Symmetrierung der Kondensatorspannungen an den Kondensatoren des Gleichspannungskreises im Normalbetrieb durchführbar, wenn das Schaltelement geschlossen ist, oder ist eine aktive symmetrische Entladung der Kondensatoren für einen Abschaltmodus des Gleichspannungskreises durchführbar, wenn das Schaltelement geöffnet ist.

Neben der Symmetrierung für den Normalbetrieb kann die Schaltung auch für die aktive symmetrische Entladung der Kondensatoren eingesetzt werden, was auf technisch einfache Weise mit dem Schaltelement realisierbar ist. Die Schaltung kann dabei auch derart ausgelegt werden, dass die Symmetrierung der Kondensatorspannungen an den Kondensatoren des Gleichspannungskreises im Normalbetrieb mittels des geöffneten Schaltelements und die aktive symmetrische Entladung der Kondensatoren für einen Abschaltmodus des Gleichspannungskreises mittels des geschlossenen Schaltelements durchführbar ist.

Bei einer weiteren vorteilhaften Ausgestaltungsform der Schaltung sind die Spannungsteilerwiderstände im dritten Schaltungspfad hochohmige Widerstände.

Um die Verluste der Spannungsteilerwiderstände an den Gate-Anschlüssen möglichst klein zu halten, sind deren Werte vorteilhaft hochohmig gewählt. Als hochohmig betrachtet werden üblicherweise Widerstandswerte ab 10KΩ.

Bei einer weiteren vorteilhaften Ausgestaltungsform der Schaltung ist das Spannungsstabilisierungs-Element im dritten Schaltungspfad eine Z-Diode.

Die Z-Diode kann in Sperrrichtung dauerhaft im Arbeitsbereich ihrer Durchbruchspannung betrieben werden. Im Gegensatz zu einer normalen Diode führt dieser dauerhaft anstehende Arbeitsbereich nicht zur Zerstörung der Z-Diode. Somit kann die Z-Diode ein an den beiden Gate-Anschlüssen der schaltbaren Halbleiter benötigtes Spannungspotential sicherstellen, was die schaltbaren Halbleiter für die aktive symmetrische Entladung im Abschaltmodus der Schaltung in einem linearen Bereich betreibbar macht.

Bei einer weiteren vorteilhaften Ausgestaltungsform der Schaltung sind die Kondensatoren im ersten Schaltungspfad Elektrolyt-Kondensatoren.

Elektrolyt-Kondensatoren haben gegenüber Vertretern anderer Kondensatorfamilien den Vorteil, dass sie eine hohe Kapazität aufweisen können. Dies macht sie für Anwendungen am Gleichspannungskreis von beispielsweise elektrischen Umrichtern sowohl aus technischer wie auch aus wirtschaftlicher Sicht interessant. Eine weitere Eigenschaft ist eine Abnahme der Kapazität mit steigender Frequenz, wobei jedoch ihre Stromtragfähigkeit steigt. Elektrolyt-Kondensatoren können mit einer vergleichsweise hohen Stromstärke belastet werden (Ripple- oder Brummstrom) und wiesen eine meist langen Lebensdauer auf.

Bei einer weiteren vorteilhaften Ausgestaltungsform der Schaltung sind die Symmetrierwiderstände im zweiten Schaltungspfad niederohmige Widerstände.

Wenn der Kondensatorladestrom zur Kompensation des Leckstroms der Kondensatoren jeweils durch die schaltbaren Halbleiter und die Symmetrierwiderstände fließt, ist es mittels der eingesetzten niederohmigen Widerstände vorteilhaft, dass durch die Symmetrierwiderstände eher wenig elektrische Verluste entstehen, wobei im Gegensatz dazu elektrische Verluste eher in den schaltbaren Halbleitern auftreten.

Bei einer weiteren vorteilhaften Ausgestaltungsform der Schaltung sind die schaltbaren Halbleiter im zweiten Schaltungspfad MOSFETs.

Der Einsatz von MOSFETs (Metal-Oxide-Semiconductor Fieldeffect Transistor) ist besonders vorteilhaft, da MOSFETs in einem linearen Bereich betrieben werden können, was dem Verhalten eines ohmschen Widerstandes entspricht.

Wird dabei von schaltbaren Halbleitern gesprochen, welche geschlossen sind oder schließen, umfasst dies auch den linearen Bereich, in dem der schaltbare Halbleiter, insbesondere der MOSFET bei entsprechender Ansteuerung arbeiten kann.

Mit diesem Verhalten der MOSFETs ist der Kondensatorladestrom zur Ladung der jeweiligen Kondensatoren steuerbar bzw. einprägbar.

Aber auch während der aktiven symmetrischen Entladung im Abschaltmodus ist mittels Ansteuerung der MOSFETs im linearen Betrieb eine Zeitkonstante für die Entladung der Kondensatoren beeinflussbar und die Entladung somit ebenfalls steuerbar.

Für die Lösung der Aufgabe wird ebenfalls ein Verfahren zur Symmetrierung und aktiven symmetrischen Entladung für eine erfindungsgemäße Schaltung vorgesehen, wobei mittels eines Schaltelements eine Betriebsartauswahl an der Schaltung getroffen wird, wobei die Symmetrierung der Kondensatorspannungen an den Kondensatoren des Gleichspannungskreises für den Normalbetrieb gewählt ist, wenn das Schaltelement elektrisch geschlossen ist, oder wobei die aktive symmetrische Entladung der Kondensatoren des Gleichspannungskreises für einen Abschaltmodus gewählt ist, wenn das Schaltelement elektrisch geöffnet ist.

Die Betriebsartauswahl mittels des Schaltelemets wählt, je nach elektrischem Zustand des Schaltelements, einerseits für den Normalbetrieb die Symmetrierung der Kondensatorspannung, andererseits die aktive symmetrische Entladung der Kondensatoren für den Abschaltmodus am Gleichspannungskreis.

Das Verfahren ist derart auslegbar, dass das Schaltelement mit Beginn des aktivierten Normalbetriebs einen übergeordneten Schaltbefehl erhält, welcher das Schaltelement elektrisch schließt.

Ein weiterer übergeordneter Schaltbefehl kann veranlassen, dass das Schaltelement elektrisch öffnet, wenn der Abschaltmodus für den Gleichspannungskreis aktiviert ist.

Bei einer ersten vorteilhaften Ausgestaltungsform des Verfahrens für den Normalbetrieb bei geschlossenem Schaltelement ist die erste Kondensatorspannung des ersten Kondensators größer als die zweite Kondensatorspannung des zweiten Kondensators, wird mittels eines ersten Spannungsteilerwiderstands ein erster Gate-Anschluss derart angesteuert, dass ein erster schaltbarer Halbleiter schließt, wird mittels eines zweiten Spannungsteilerwiderstands ein weiterer Gate-Anschluss derart angesteuert, dass ein zweiter schaltbarer Halbleiter öffnet, und fließt ein erster Kondensatorladestrom durch den ersten Symmetrierwiderstand zur Kompensation eines zweiten Leckstroms am zweiten Kondensator, bis eine erste Gate-Source-Spannung am ersten schaltbaren Halbleiter eine erste Thresold-Spannung erreicht oder unterschreitet und der erste schaltbare Halbleiter öffnet.

Bei einer weiteren vorteilhaften Ausgestaltungsform des Verfahrens für den Normalbetrieb bei geschlossenem Schaltelement ist die erste Kondensatorspannung des ersten Kondensators kleiner ist als die zweite Kondensatorspannung des zweiten Kondensators, wird mittels eines zweiten Spannungsteilerwiderstands ein weiterer Gate-Anschluss derart angesteuert, dass ein zweiter schaltbarer Halbleiter schließt, wird mittels eines ersten Spannungsteilerwiderstands ein erster Gate-Anschluss derart angesteuert, dass ein erster schaltbarer Halbleiter öffnet, und fließt ein zweiter Kondensatorladestrom durch einen zweiten Symmetrierwiderstand zur Kompensation eines ersten Leckstroms am ersten Kondensator, bis eine weitere Gate-Source-Spannung am zweiten schaltbaren Halbleiter eine weitere Thresold-Spannung erreicht oder unterschreitet und der zweite schaltbare Halbleiter öffnet.

Das Verfahren zeigt somit deutlich und in vorteilhafter Weise, dass eine Ansteuerung der schaltbaren Halbleiter mittels einer Regelungseinheit und eines Modulationsverfahrens zu keinem Zeitpunkt für die Symmetrierung der Kondensatorspannungen an den Kondensatoren des ersten Schaltungspfades am Gleichspannungskreis notwendig ist. Auch ist nachvollziehbar, dass sich die elektrischen Verluste bei Ausführung des Verfahrens gegenüber bekannten Symmetrierungsverfahren signifikant unterscheiden. So wird nur derjenige schaltbare Halbleiter sowie derjenige Symmetrierwiderstand vom Kondensatorladestrom durchflossen, und erzeugt demnach zumindest begrenzte Verluste, welches zur bedarfsgerechten Ladung des Kondensators benötigt wird. Ist keine Symmetrierung notwendig, da sich die Kondensatorspannungen annähernd gleichmäßig bzgl. der Gleichspannung am Gleichspannungskreis aufteilen, entstehen auch keine elektrischen Verluste, da die schaltbaren Halbleiter geöffnet werden.

Bei einer ebenfalls vorteilhaften Ausgestaltungsform des Verfahrens für den Abschaltmodus bei geöffnetem Schaltelement werden mittels eines Spannungsstabilisierungselements, eines ersten Spannungsteilerwiderstands und eines zweiten Spannungsteilerwiderstands ein erster Gate-Anschluss eines ersten schaltbaren Halbleiters und ein weiterer Gate-Anschluss eines zweiten schaltbaren Halbleiters derart angesteuert, dass beide schaltbaren Halbleiter geschlossen sind, und werden die Kondensatoren symmetrisch über den zweiten Schaltpfad entladen, bis eine erste Gate-Source-Spannung am ersten schaltbaren Halbleiter eine erste Thresold-Spannung und/ oder eine weitere Gate-Source-Spannung am zweiten schaltbaren Halbleiter eine weitere Thresold-Spannung erreicht oder unterschreitet und die schaltbaren Halbleiter geöffnet werden.

Auch hier zeigt sich ein weiterer Vorteil des Verfahrens für die Schaltung. Einerseits ist nach Öffnung des Schalters die aktive symmetrische Entladung für den Abschaltmodus möglich, andererseits erfolgt die aktive Entladung mittels gleichzeitiger Symmetrierung der Kondensatorspannungen, wobei der lineare Betrieb der schaltbaren Halbleiter ausgenutzt werden kann, eine Entladungszeit über die Ansteuerung der Gate-Anschlüsse zu beeinflussen.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung der Ausführungsbeispiele, die im Zusammenhang mit den Figuren näher erläutert werden. Es zeigt:
- FIG 1: ein schematisches Schaltbild einer bekannten Symmetrierschaltung zur Symmetrierung von Kondensatorspannungen an Kondensatoren am Gleichspannungskreis,
- FIG 2: ein erstes schematisches Schaltbild mit der erfindungsgemäßen Schaltung zur Symmetrierung von Kondensatorspannungen an Kondensatoren am Gleichspannungskreis und zur aktiven symmetrischen Entladung von Kondensatoren am Gleichspannungskreis,
- FIG 3: ein zweites schematisches Schaltbild der erfindungsgemäßen Schaltung gemäß FIG 2 mit einem Ausgestaltungsbeispiel des Schaltelements,
- FIG 4: ein drittes schematisches Schaltbild der erfindungsgemäßen Schaltung gemäß FIG 2 und FIG 3 mit einem erfindungsgemäßen Verfahren im Normalbetrieb zur Symmetrierung von Kondensatorspannungen an Kondensatoren am Gleichspannungskreis mit einem ersten Leckstrom eines ersten Kondensators,
- FIG 5: ein viertes schematisches Schaltbild der erfindungsgemäßen Schaltung gemäß FIG 2 bis FIG 4 mit dem erfindungsgemäßen Verfahren im Normalbetrieb zur Symmetrierung von Kondensatorspannungen an Kondensatoren am Gleichspannungskreis mit einem zweiten Leckstrom eines zweiten Kondensators, und
- FIG 6: ein fünftes schematisches Schaltbild der erfindungsgemäßen Schaltung gemäß FIG 2 bis FIG 5 mit dem erfindungsgemäßen Verfahren im Abschaltmodus zur aktiven symmetrischen Entladung von Kondensatoren am Gleichspannungskreis.

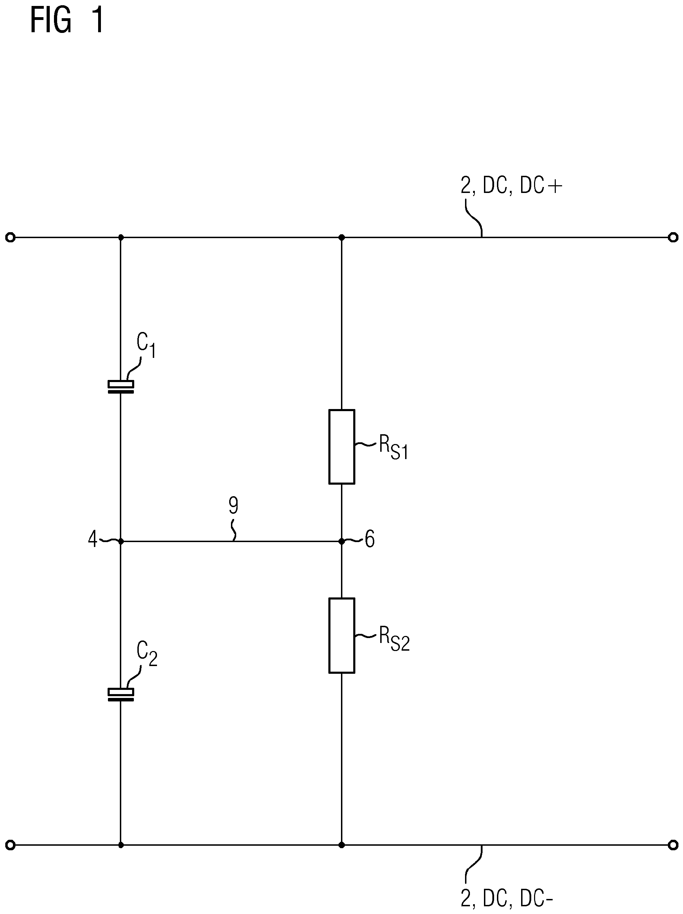

In FIG 1 ist ein schematisches Schaltbild einer bekannten Symmetrieschaltung für Kondensatorspannungen an Kondensatoren C₁, C₂ am Gleichspannungskreis 2 dargestellt.

Gemäß dem Stand der Technik sind zwei in Reihe geschaltete Kondensatoren C₁, C₂ zwischen einem ersten Potential DC+ und einem zweiten Potential DC- einer Gleichspannung DC an dem Gleichspannungskreis 2 angeordnet. Damit die Kondensatorspannungen symmetrisch an den Kondensatoren C₁, C₂ abfallen können, werden zwei in Reihe geschaltete Symmetrierungselemente R_{S1}, R_{S2} in Form von ohmschen Widerständen zu den in Reihe geschalteten Kondensatoren C₁, C₂ parallelgeschaltet. Jeweils zwischen den Kondensatoren C₁, C₂ und den Symmetrierwiderständen R_{S1}, R_{S2} eingebrachte Mittelanschlüsse 4, 6 sind durch eine elektrische Verbindung 9 miteinander verbunden.

Ohne diese Symmetrierung der Kondensatorspannungen an den bzgl. Typ und elektrischer Werte gleichartig ausgewählten Kondensatoren C₁, C₂ käme es durch material- und aufbaubedingte Toleranzen an den Kondensatoren C₁, C₂ zu einer ungleichmäßigen Spannungsverteilung. Wenn beispielsweise ein erster Kondensator C₁ einen kleineren Leckstrom als ein zweiter Kondensator C₂ aufweist, wird der erste Kondensator C₁ mit einer höheren Kondensatorspannung beaufschlagt, welche ggf. zur Zerstörung oder zumindest zur Beschädigung des ersten Kondensators C₁ führen kann. Üblicherweise sind die Werte der als Symmetrierwiderstände R_{S1}, R_{S2} eingebrachten ohmschen Widerstände gleich und derart gewählt, das sie Querströme leiten können, welche ein Vielfaches der möglichen Leckströme der Kondensatoren C₁, C₂ betragen.

Derartige Symmetrierschaltungen werden häufig bei elektrischen Umrichtern, insbesondere Frequenzumrichtern mit Gleichspannungskreis 2 bzw. einem Gleichspannungszwischenkreis eingesetzt, bei denen aufgrund der Höhe der Gleichspannung DC am Gleichspannungskreis 2 mehrere Kondensatoren C₁, C₂ in Reihe geschaltet sind. Üblicherweise reicht allerdings die maximale Spannungsfestigkeit der beispielsweise als Elektrolyt-Kondensatoren ausgeführten und in Reihe geschalteten Kondensatoren C₁, C₂ für die Gleichspannung DC am Gleichspannungskreis 2 nicht aus, weswegen die Kondensatoren C₁, C₂ wie beschrieben in Reihe am Gleichspannungskreis 2 betrieben werden.

Die aus FIG 1 ersichtlichen Symmetrierwiderstände R_{S1}, R_{S2} und deren Anordnung in der Symmetrierschaltung vermeiden einen unzulässig hohen Spannungsabfall an den Kondensatoren C₁, C₂, welche aufgrund von Leckströmen entstehen können, wobei jedoch signifikante Verlustleistung in Kauf zu nehmen sind, da die Querströme durch die Symmetrierwiderstände R_{S1}, R_{S2}, auch dann fließen, wenn keine Symmetrierung der Kondensatorspannungen notwendig ist.

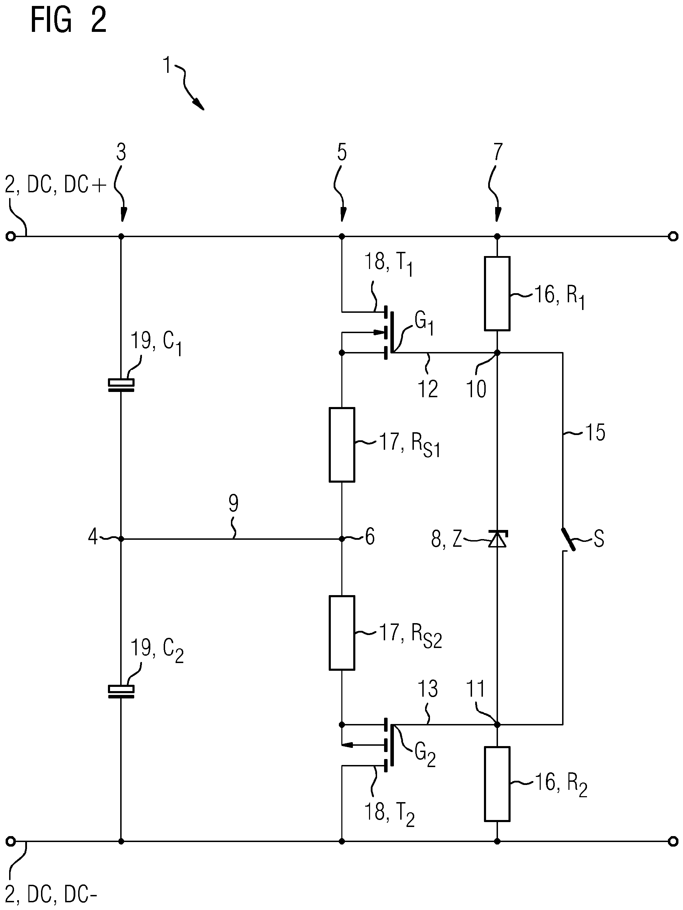

Mit FIG 2 wird ein erstes schematisches Schaltbild mit der erfindungsgemäßen Schaltung 1 zur Symmetrierung von Kondensatorspannungen U_{C1}, U_{C2} an Kondensatoren C₁, C₂ am Gleichspannungskreis 2 und zur aktiven symmetrischen Entladung von Kondensatoren C₁, C₂ am Gleichspannungskreis 2 aufgezeigt.

Dabei sind in einem ersten Schaltungspfad 3 mindesten ein erster Kondensator C₁ und ein zweiter Kondensator C₂ in Reihe zwischen einem ersten Potential DC+ und einem zweiten Potential DC- einer Gleichspannung DC des Gleichspannungskreises 2 geschaltet. Zwischen dem ersten Kondensator C₁ und dem zweiten Kondensator C₂ ist ein erster Mittelanschluss 4 ausgebildet.

Ein zweiter Schaltungspfad 5 weist einen ersten schaltbaren Halbleiter T₁, einen ersten Symmetrierwiderstand R_{S1}, einen zweiten Symmetrierwiderstand R_{S2} und einen zweiten schaltbaren Halbleiter T₂ auf, welche ebenfalls in Reihe zwischen den Potentialen DC+, DC- geschaltet sind. In diesem zweiten Schaltungspfad 5 ist der erste schaltbare Halbleiter T₁ am ersten Potential DC+ und der zweite schaltbare Halbleiter T₂ am zweiten Potential DC- angeordnet. Der erste Symmetrierwiderstand R_{S1} und der zweite Symmetrierwiderstand R_{S2} hingegen sind zwischen dem ersten schaltbaren Halbleiter T₁ und dem zweiten schaltbaren Halbeiter T₂ eingebracht. Weiterhin bilden der erste Symmetrierwiderstand R_{S1} und der zweite Symmetrierwiderstand R_{S2} einen zweiten Mittelanschluss 6.

Eine erste elektrische Verbindung 9 des ersten Mittelanschlusses 4 im ersten Schaltungspfad 3 ist mit dem zweiten Mittelanschluss 6 im zweiten Schaltungspfad 5 verbunden.

FIG 2 zeigt weiterhin, zwischen den Potentialen DC+, DC- des Gleichspannungskreises 2 in Reihe geschaltet, in einem dritten Schaltungspfad 7 einen ersten Spannungsteilerwiderstand R₁, ein Spannungsstabilisierungs-Element 8 und einen zweiten Spannungsteilerwiderstand R₂. Der erste Spannungsteilerwiderstand R₁ ist am ersten Potential DC+, der zweite Spannungsteilerwiderstand R₂ am zweiten Potential DC- und das Spannungsstabilisierungs-Element 8 zwischen den Spannungsteilerwiderständen R₁, R₂ angeordnet. Ein erster Anschluss 10 ist zwischen dem ersten Spannungsteilerwiderstand R₁ und dem Spannungsstabilisierungs-Element 8 sowie ein zweiter Anschluss 11 zwischen dem zweiten Spannungsteilerwiderstand R₂ und dem Spannungsstabilisierungs-Element 8 jeweils ausgebildet.

Während eine zweite elektrische Verbindung 12 zwischen dem ersten Gate-Anschluss G₁ des ersten schaltbaren Halbleiters T₁ und dem ersten Anschluss 10 eingerichtet ist, befindet sich eine dritte elektrische Verbindung 13 zwischen dem weiteren Gate-Anschluss G₂ des zweiten schaltbaren Halbleiters T₂ und dem zweiten Anschluss 11.

Ein Schaltelement S ist in einer vierten elektrischen Verbindung 15 zwischen dem ersten Anschluss 10 und dem zweiten Anschluss 11 parallel zum Spannungsstabilisierungs-Element 8 angeordnet.

Die in FIG 2 gezeigte Schaltung 1 ist dafür eingerichtet, einerseits die Symmetrierung der Kondensatorspannungen an den Kondensatoren C₁, C₂ des Gleichspannungskreises 2 im Normalbetrieb durchzuführen, wenn das Schaltelement S geschlossen ist, andererseits aber auch eine aktive symmetrische Entladung der Kondensatoren C₁, C₂ für einen Abschaltmodus des Gleichspannungskreises durchzuführen, wenn das Schaltelement S geöffnet ist.

Vorteilhafterweise werden die Spannungsteilerwiderstände R₁, R₂ im dritten Schaltungspfad 7 als hochohmige Widerstände 16 und die Symmetrierwiderstände R_{S1}, R_{S2} im zweiten Schaltungspfad 5 als niederohmige Widerstände 17 ausgeführt.

Besondere Bedeutung hat das Spannungsstabilisierungs-Element 8 im dritten Schaltungspfad 5 für die aktive symmetrische Entladung der Kondensatoren C₁, C₂ im Abschaltmodus des Gleichspannungskreises 2. Eine Z-Diode Z erweist sich dabei als geeignetes Bauelement zur Spannungsstabilisierung an den Gate-Anschlüssen G₁, G₂ der schaltbaren Halbleiter T₁, T₂.

MOSFETs 18 als schaltbare Halbleiter T₁, T₂ lassen sich in einem linearen Bereich betreiben, wobei sich die MOSFETs 18 in diesem Bereich wie ein ohmscher Widerstand verhalten. Das ist eine Eigenschaft, wie sie sowohl für die Symmetrierung der Kondensatorspannungen, wie auch für die aktive symmetrische Entladung der Kondensatoren C₁, C₂ von Vorteil ist, da sich damit sowohl Lade- wie auch Entladeströme im zweiten Schaltpfad 5 steuern lassen.

Die Schaltung 1 ist besonders für einen Einsatz von Elektrolyt-Kondensatoren 19 als Kondensatoren C₁, C₂ im ersten Schaltungspfad 3 geeignet, da insbesondere Elektrolyt-Kondensatoren 19 einerseits bauartbedingt Leckströme aufweisen, andererseits am Gleichspannungskreis 2 mit einer vergleichsweise hohen Gleichspannung DC betrieben werden können, so dass eine Symmetrierung der Kondensatorspannungen oftmals unumgänglich ist.

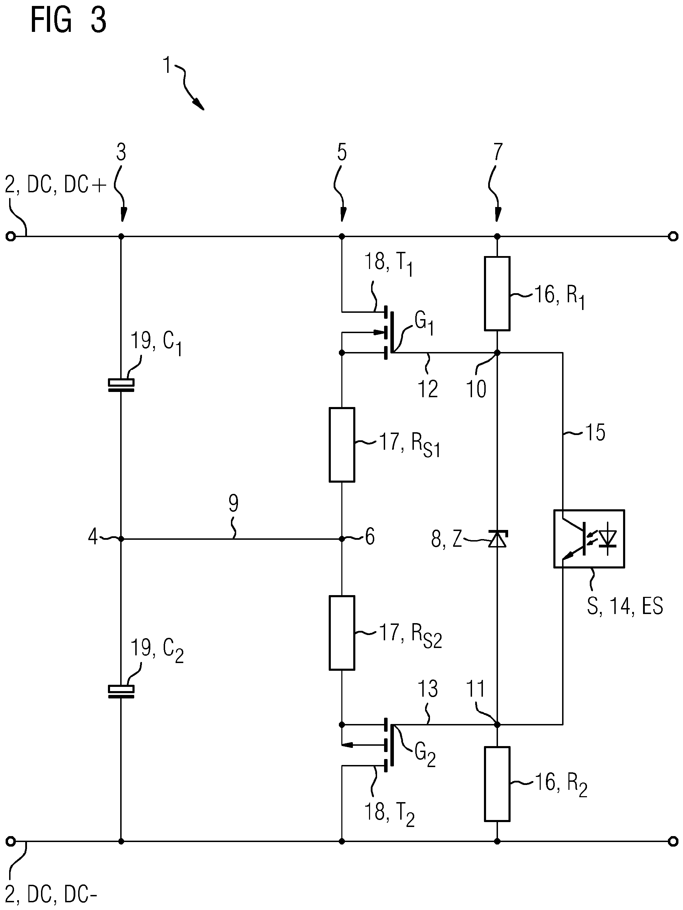

Das schematische Schaltbild in FIG 3 zeigt prinzipiell die gleiche Schaltung 1 wie in FIG 2. Allerdings ist hier das Schaltelement S in der vierten elektrischen Verbindung 15 in Form eines elektronischen Schalters ES ausgelegt und im Weiteren spezifiziert als ein Optokoppler 14. Elektronische Schalter ES haben sowohl baulich wie auch funktional Vorteile gegenüber mechanischen Schaltern. Insbesondere eine galvanische Trennung, wie sie ein Optokoppler 14 als systemimmanente Eigenschaft aufweist, kann sicherstellen, dass die Schaltung 1 relativ autark am Gleichspannungszwischenkreis 2 arbeitet und vor allem selbststeuernd agiert.

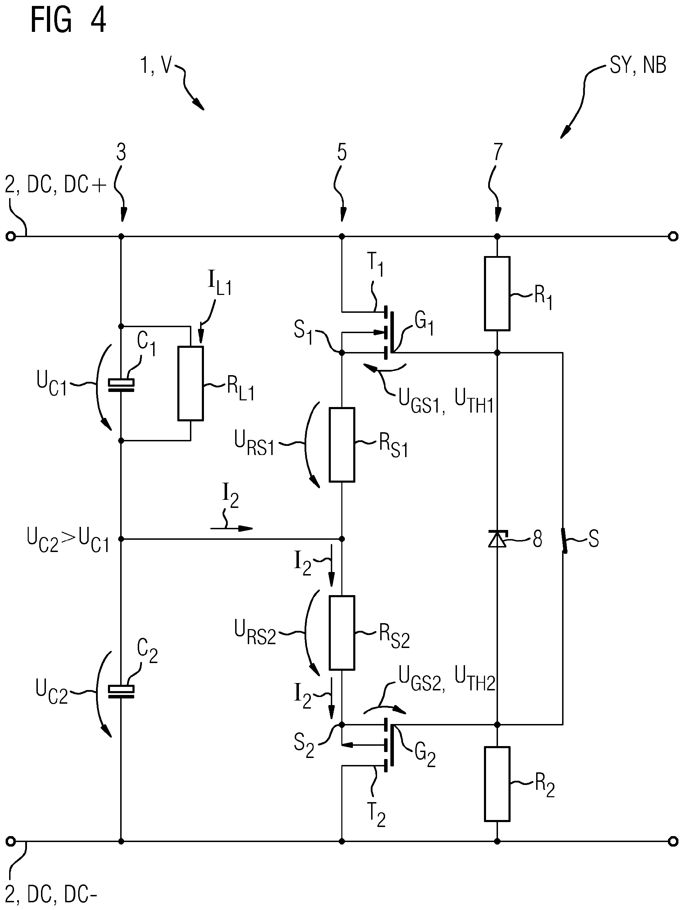

In FIG 4 visualisiert ein drittes schematisches Schaltbild der erfindungsgemäßen Schaltung 1 gemäß FIG 2 und FIG 3 ein erfindungsgemäßes Verfahren V für einen Normalbetrieb NB zur Symmetrierung SY von Kondensatorspannungen U_{C1}, U_{C2} an Kondensatoren C₁, C₂ am Gleichspannungskreis 2 mit einem ersten Leckstrom I_{L1} eines ersten Kondensators C₁.

Durch ein Schaltelement S wurde eine Betriebsartauswahl A an der Schaltung 1 getroffen. Die Symmetrierung SY der Kondensatorspannungen U_{C1}, U_{C2} an den Kondensatoren C₁, C₂ des Gleichspannungskreises 2 für den Normalbetrieb NB ist angewählt, da das Schaltelement S elektrisch geschlossen ist.

Die erste Kondensatorspannung U_{C1} des ersten Kondensators C₁ ist aufgrund eines ersten Leckstroms I_{L1} durch den ersten Leckwiderstand R_{L1} kleiner als die zweite Kondensatorspannung U_{C2} des zweiten Kondensators C₂.

Mittels eines ersten Spannungsteilerwiderstands R₁ wird ein erster Gate-Anschluss G₁ derart angesteuert, dass ein erster schaltbarer Halbleiter T₁ öffnet und mittels eines zweiten Spannungsteilerwiderstands R₂ wird ein weiterer Gate-Anschluss G₂ derart angesteuert, dass ein zweiter schaltbarer Halbleiter T₂ schließt. Der erste schaltbarer Halbleiter T₁ bleibt geöffnet, da eine erste Gate-Source-Spannung U_{GS1} kleiner ist als eine erste Thresold-Spannung U_{TH1} über dem ersten Source-Anschluss S₁ und dem ersten Gate-Anschluss G₁ des ersten schaltbaren Halbleiters T₁.

Der sich einstellende zweite Kondensatorladestrom I₂ fließt durch einen zweiten Symmetrierwiderstand R_{S2} zur Kompensation des ersten Leckstroms I_{L1} am ersten Kondensator C₁, bis eine weitere Gate-Source-Spannung U_{GS2} über einem weiteren Source-Anschluss S₂ und dem weiteren Gate-Anschluss G₂ am zweiten schaltbaren Halbleiter T₂ eine weitere Thresold-Spannung U_{TH2} erreicht oder unterschreitet, und somit den zweiten schaltbaren Halbleiter T₂ öffnet.

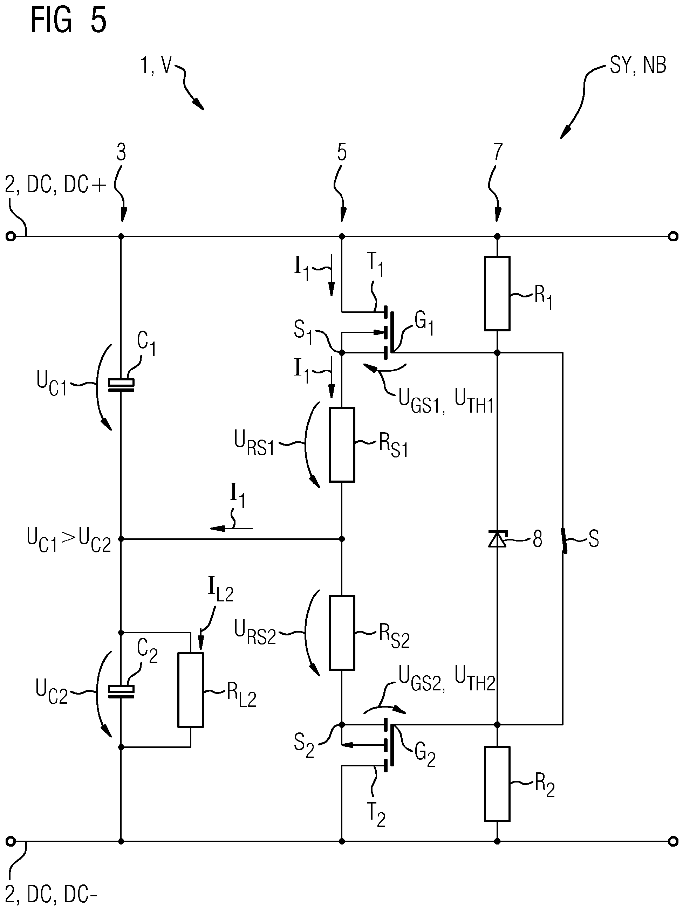

In FIG 5 visualisiert ein viertes schematisches Schaltbild der erfindungsgemäßen Schaltung 1 gemäß FIG 2 bis FIG 4 ein erfindungsgemäßes Verfahren V für einen Normalbetrieb NB zur Symmetrierung SY von Kondensatorspannungen U_{C1}, U_{C2} an Kondensatoren C₁, C₂ am Gleichspannungskreis 2 mit einem zweiten Leckstrom I_{L2} eines zweiten Kondensators C₂.

Durch ein Schaltelement S wurde eine Betriebsartauswahl A an der Schaltung 1 getroffen. Die Symmetrierung SY der Kondensatorspannungen U_{C1}, U_{C2} an den Kondensatoren C₁, C₂ des Gleichspannungskreises 2 für den Normalbetrieb NB ist angewählt, da das Schaltelement S elektrisch geschlossen ist.

Die zweite Kondensatorspannung U_{C2} des zweiten Kondensators C₂ ist aufgrund eines zweiten Leckstroms I_{L2} durch den zweiten Leckwiderstand R_{L2} kleiner als die erste Kondensatorspannung U_{C1} des ersten Kondensators C₁.

Mittels eines zweiten Spannungsteilerwiderstands R₂ wird ein weiterer Gate-Anschluss G₂ derart angesteuert, dass ein zweiter schaltbarer Halbleiter T₂ öffnet und mittels eines ersten Spannungsteilerwiderstands R₁ wird ein erster Gate-Anschluss G₁ derart angesteuert, dass ein erster schaltbarer Halbleiter T₁ schließt. Der zweite schaltbare Halbleiter T₂ bleibt geöffnet, da eine weitere Gate-Source-Spannung U_{GS2} kleiner ist als eine weitere Thresold-Spannung U_{TH2} über dem weiteren Source-Anschluss S₂ und dem weiteren Gate-Anschluss G₂ des zweiten schaltbaren Halbleiters T₂.

Der sich einstellende erste Kondensatorladestrom I₁ fließt durch einen ersten Symmetrierwiderstand R_{S1} zur Kompensation des zweiten Leckstroms I_{L2} am zweiten Kondensator C₂, bis eine erste Gate-Source-Spannung U_{GS1} über einem ersten Source-Anschluss S₁ und dem ersten Gate-Anschluss G₁ am ersten schaltbaren Halbleiter T₁ eine erste Thresold-Spannung U_{TH1} erreicht oder unterschreitet, und somit den ersten schaltbaren Halbleiter T₁ öffnet.

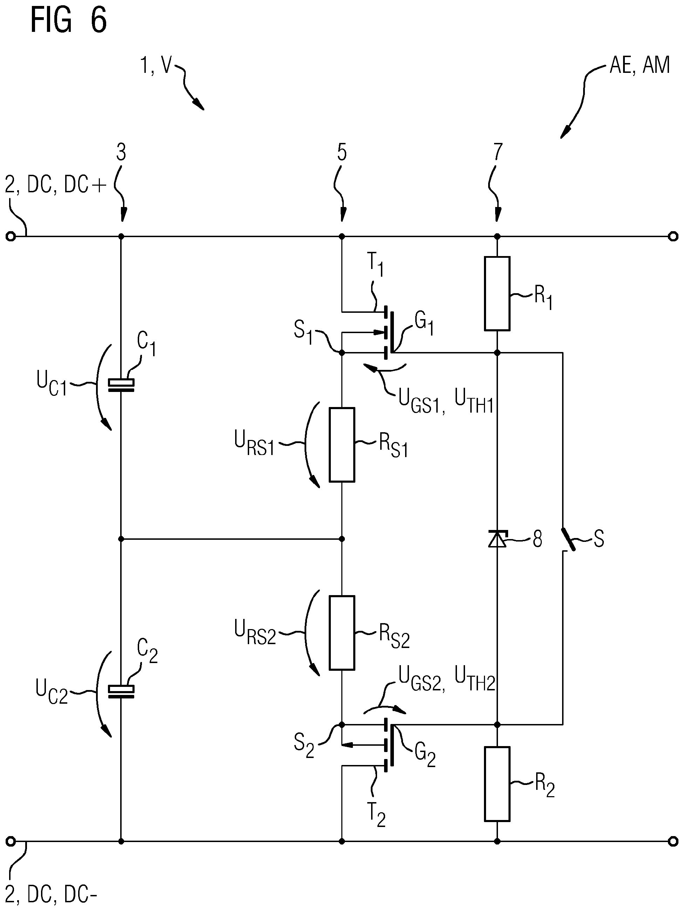

In FIG 6 visualisiert ein fünftes schematisches Schaltbild der erfindungsgemäßen Schaltung 1 gemäß FIG 2 bis FIG 5 mit dem erfindungsgemäßen Verfahren V im Abschaltmodus AM zur aktiven symmetrischen Entladung AE von Kondensatoren C₁, C₂ am Gleichspannungskreis 2.

Durch ein Schaltelement S wurde eine Betriebsartauswahl A an der Schaltung 1 getroffen. Die aktive symmetrische Entladung AE der Kondensatoren C₁, C₂ des Gleichspannungskreises 2 für einen Abschaltmodus AM ist angewählt, da das Schaltelement S elektrisch geöffnet ist.

Mittels eines Spannungsstabilisierungselements 8, eines ersten Spannungsteilerwiderstands R₁ und eines zweiten Spannungsteilerwiderstands R₂ des dritten Schaltungspfades 7 wird jeweils ein erster Gate-Anschluss G₁ eines ersten schaltbaren Halbleiters T₁ und ein weiterer Gate-Anschluss G₂ eines zweiten schaltbaren Halbleiters T₂ derart angesteuert, dass beide schaltbaren Halbleiter T₁, T₂ geschlossen sind.

Die Kondensatoren C₁, C₂ werden nunmehr symmetrisch über den zweiten Schaltpfad 5 entladen, bis eine erste Gate-Source-Spannung U_{GS1} über einem ersten Source-Anschluss S₁ und dem ersten Gate-Anschluss G₁ am ersten schaltbaren Halbleiter T₁ eine erste Thresold-Spannung U_{TH1} erreicht oder unterschreitet und/ oder eine weitere Gate-Source-Spannung U_{GS2} über einem weiteren Source-Anschluss S₂ und dem weiteren Gate-Anschluss G₂ am zweiten schaltbaren Halbleiter T₂ eine weitere Thresold-Spannung U_{TH2} erreicht oder unterschreitet, und somit die schaltbaren Halbleiter T₁, T₂ öffnen.

## Patentansprüche

1. Schaltung (1) zur Symmetrierung (SY) von Kondensatorspannungen (U_{C1}, U_{C2}) an Kondensatoren (C₁, C₂) in einem Gleichspannungskreis (2), aufweisend
- einen ersten Schaltungspfad (3) mit mindestens einem ersten Kondensator (C₁) und einem zweiten Kondensator (C₂), welche in Reihe zwischen einem ersten Potential (DC+) und einem zweiten Potential (DC-) einer Gleichspannung (DC) des Gleichspannungskreises (2) geschaltet sind, wobei zwischen dem ersten Kondensator (C₁) und dem zweiten Kondensator (C₂) ein erster Mittelanschluss (4) ausgebildet ist,
- einen zweiten Schaltungspfad (5) mit einem ersten schaltbaren Halbleiter (T₁), einem ersten Symmetrierwiderstand (R_{S1}), einem zweiten Symmetrierwiderstand (R_{S2}) und einem zweiten schaltbaren Halbleiter (T₂), welche in Reihe zwischen den Potentialen (DC+, DC-) geschaltet sind, wobei der erste schaltbare Halbleiter (T₁) am ersten Potential (DC+) und der zweite schaltbare Halbleiter (T₂) am zweiten Potential (DC-) angeordnet ist, wobei der erste Symmetrierwiderstand (R_{S1}) und der zweite Symmetrierwiderstand (R_{S2}) zwischen dem ersten schaltbaren Halbleiter (T₁) und dem zweiten schaltbaren Halbeiter (T₂) angeordnet sind, und wobei zwischen dem ersten Symmetrierwiderstand (R_{S1}) und dem zweiten Symmetrierwiderstand (R_{S2}) ein zweiter Mittelanschluss (6) ausgebildet ist, und
- eine erste elektrische Verbindung (9) des ersten Mittelanschlusses (4) im ersten Schaltungspfad (3) mit dem zweiten Mittelanschluss (6) im zweiten Schaltungspfad (5),
**dadurch gekennzeichnet, dass**
- in einem dritten Schaltungspfad (7) ein erster Spannungsteilerwiderstand (R₁), ein Spannungsstabilisierungs-Element (8) und ein zweiter Spannungsteilerwiderstand (R₂) zwischen den Potentialen (DC+, DC-) in Reihe geschaltet sind,
- dar erste Spannungsteilerwiderstand (R₁) am ersten Potential (DC+), der zweite Spannungsteilerwiderstand (R₂) am zweiten Potential (DC-) und das Spannungsstabilisierungs-Element (8) zwischen den Spannungsteilerwiderständen (R₁, R₂) angeordnet ist,
- zwischen dem ersten Spannungsteilerwiderstand (R₁) und dem Spannungsstabilisierung-Element (8) ein erster Anschluss (10) sowie zwischen dem zweiten Spannungsteilerwiderstand (R₂) und dem Spannungsstabilisierungs-Element (8) ein zweiter Anschluss (11) ausgebildet ist,
- eine zweite elektrische Verbindung (12) zwischen dem ersten Gate-Anschluss (G₁) des ersten schaltbaren Halbleiters (T₁) und dem ersten Anschluss (10) sowie eine dritte elektrische Verbindung (13) zwischen dem weiteren Gate-Anschluss (G₂) des zweiten schaltbaren Halbleiters (T₂) und dem zweiten Anschluss (11) eingerichtet ist,
- ein Schaltelement (S) in einer vierten elektrischen Verbindung (15) zwischen dem ersten Anschluss (10) und dem zweiten Anschluss (11), parallel zum Spannungsstabilisierungs-Element (8) angeordnet ist und
- das Spannungsstabilisierung-Element (8) im dritten Schaltungspfad (5) eine Z-Diode (Z) ist.

2. Schaltung (1) nach Anspruch 1,
wobei ein erster Gate-Anschluss (G₁) des ersten schaltbaren Halbleiters (T₁) und ein weiterer Gate-Anschluss (G₂) des zweiten schaltbaren Halbleiters (T₂) jeweils in Abhängigkeit eines ersten Leckstroms (I_{L1}) am ersten Kondensator (C₁) oder eines zweiten Leckstroms (I_{L2}) am zweiten Kondensator (C₂) derart ansteuerbar sind, dass mittels des ersten schaltbaren Halbleiters (T₁) und des ersten Symmetrier-Widerstands (R_{S1}) ein erster Kondensatorladestrom (I₁) in den zweiten Kondensator (C₂) zur Kompensation des zweiten Leckstroms (I_{L2}) einprägbar ist und mittels des zweiten schaltbaren Halbleiters (T₂) und des zweiten Symmetrier-Widerstands (R_{S2}) ein zweiter Kondensatorladestrom (I₂) in den ersten Kondensator (C₁) zur Kompensation des ersten Leckstroms (I_{L1}) einprägbar ist.

3. Schaltung (1) nach einem der Ansprüche 1 oder 2,
wobei das Schaltelement (S) ein elektronischer Schalter (ES) ist.

4. Schaltung (1) nach Anspruch 3,
wobei der elektronische Schalter (ES) ein Optokoppler (14) ist.

5. Schaltung (1) nach einem der vorhergehenden Ansprüche,
wobei die Symmetrierung (SY) der Kondensatorspannungen (U_{C1}, U_{C2}) an den Kondensatoren (C₁, C₂) des Gleichspannungskreises (2) im Normalbetrieb (NB) durchführbar ist, wenn das Schaltelement (S) geschlossen ist oder wobei eine aktive symmetrische Entladung (AE) der Kondensatoren (C₁, C₂) für einen Abschaltmodus (AM) des Gleichspannungskreises (2) durchführbar ist, wenn das Schaltelement (S) geöffnet ist.

6. Schaltung (1) nach einem der vorhergehenden Ansprüche,
wobei die Spannungsteilerwiderstände (R₁, R₂) im dritten Schaltungspfad (5) hochohmige Widerstände (16) sind.

7. Schaltung (1) nach einem der vorhergehenden Ansprüche,
wobei die Kondensatoren (C₁, C₂) im ersten Schaltungspfad (3) Elektrolyt-Kondensatoren (19) sind.

8. Schaltung (1) nach einem der vorhergehenden Ansprüche,
wobei die Symetrierwiderstände (R_{S1}, R_{S2}) im zweiten Schaltungspfad (5) niederohmige Widerstände (17) sind.

9. Schaltung (1) nach einem der vorhergehenden Ansprüche,
wobei die schaltbaren Halbleiter (T₁, T₂) im zweiten Schaltungspfad (5) MOSFETs (18) sind.

10. Verfahren zur Symmetrierung (SY) und aktiven symmetrischen Entladung (AE) für eine Schaltung (1) nach einem der Ansprüche 1 bis 9,
wobei
- mittels eines Schaltelements (S) eine Betriebsartauswahl (A) an der Schaltung (1) getroffen wird,
- die Symmetrierung (SY) der Kondensatorspannungen (U_{C1}, U_{C2}) an den Kondensatoren (C₁, C₂) des Gleichspannungskreises (2) für den Normalbetrieb (NB) gewählt ist, wenn das Schaltelement (S) elektrisch geschlossen ist, oder
- die aktive symmetrische Entladung (AE) der Kondensatoren (C₁, C₂) des Gleichspannungskreises (2) für einen Abschaltmodus (AM) gewählt ist, wenn das Schaltelement (S) elektrisch geöffnet ist.

11. Verfahren (V) nach Anspruch 10,
wobei für den Normalbetrieb (NB) bei geschlossenem Schaltelement (S)
- die erste Kondensatorspannung (U_{C1}) des ersten Kondensators (C₁) größer ist als die zweite Kondensatorspannung (U_{C2}) des zweiten Kondensators (C₂),
- mittels eines ersten Spannungsteilerwiderstands (R₁) ein erster Gate-Anschluss (G₁) derart angesteuert wird, dass ein erster schaltbarer Halbleiter (T₁) schließt,
- mittels eines zweiten Spannungsteilerwiderstands (R₂) ein weiterer Gate-Anschluss (G₂) derart angesteuert wird, dass ein zweiter schaltbarer Halbleiter (T₂) öffnet, und
- ein erster Kondensatorladestrom (I₁) durch den ersten Symmetrierwiderstand (R_{S1}) zur Kompensation eines zweiten Leckstroms (I_{L2}) am zweiten Kondensator (C₂) fließt, bis eine erste Gate-Source-Spannung (U_{GS1}) am ersten schaltbaren Halbleiter (T₁) eine erste Thresold-Spannung (U_{TH1}) erreicht oder unterschreitet und der erste schaltbare Halbleiter (T₁) öffnet.

12. Verfahren (V) nach Anspruch 10,
wobei für den Normalbetrieb (NB) bei geschlossenem Schaltelement (S)
- die erste Kondensatorspannung (U_{C1}) des ersten Kondensators (C₁) kleiner ist als die zweite Kondensatorspannung (U_{C2}) des zweiten Kondensators (C₂),
- mittels eines zweiten Spannungsteilerwiderstands (R₂) ein weiterer Gate-Anschluss (G₂) derart angesteuert wird, dass ein zweiter schaltbarer Halbleiter (T₂) schließt,
- mittels eines ersten Spannungsteilerwiderstands (R₁) ein erster Gate-Anschluss (G₁) derart angesteuert wird, dass ein erster schaltbarer Halbleiter (T₁) öffnet, und
- ein zweiter Kondensatorladestrom (I₂) durch einen zweiten Symmetrierwiderstand (R_{S2}) zur Kompensation eines ersten Leckstroms (I_{L1}) am ersten Kondensator (C₁) fließt, bis eine weitere Gate-Source-Spannung (U_{GS2}) am zweiten schaltbaren Halbleiter (T₂) eine weitere Thresold-Spannung (U_{TH2}) erreicht oder unterschreitet und der zweite schaltbare Halbleiter T₂ öffnet.

13. Verfahren (V) nach Anspruch 10,
wobei für den Abschaltmodus (AM) bei geöffnetem Schaltelement (S)
- mittels eines Spannungsstabilisierungselements (8), eines ersten Spannungsteilerwiderstands (R₁) und eines zweiten Spannungsteilerwiderstands (R₂) jeweils ein erster Gate-Anschluss (G₁) eines ersten schaltbaren Halbleiters (T₁) und ein weiterer Gate-Anschluss (G₂) eines zweiten schaltbaren Halbleiters (T₂) derart angesteuert werden, dass beide schaltbaren Halbleiter (T₁, T₂) geschlossen sind, und
- die Kondensatoren (C₁, C₂) symmetrisch über den zweiten Schaltpfad (5) entladen werden, bis eine erste Gate-Source-Spannung (U_{GS1}) am ersten schaltbaren Halbleiter (T₁) eine erste Thresold-Spannung (U_{TH1}) und/ oder eine weitere Gate-Source-Spannung (U_{GS2}) am zweiten schaltbaren Halbleiter (T₂) eine weitere Thresold-Spannung (U_{TH2}) jeweils erreicht oder unterschreitet und die schaltbaren Halbleiter (T₁, T₂) geöffnet werden.

## Claims

1. Circuit (1) for balancing (SY) capacitor voltages (U_{C1}, U_{C2}) at capacitors (C₁, C₂) in a DC circuit (2), comprising
- a first circuit path (3) having at least one first capacitor (C₁) and one second capacitor (C₂) which are connected in series between a first potential (DC+) and a second potential (DC-) of a DC voltage (DC) of the DC circuit (2), wherein a first centre tap (4) is arranged between the first capacitor (C₁) and the second capacitor (C₂),
- a second circuit path (5) with a first switchable semiconductor (T₁), a first balancing resistor (R_{S1}), a second balancing resistor (R_{S2}) and a second switchable semiconductor (T₂), which are connected in series between the potentials (DC+, DC-), wherein the first switchable semiconductor (T₁) is arranged at the first potential (DC+) and the second switchable semiconductor (T₂) is arranged at the second potential (DC-), wherein the first balancing resistor (R_{S1}) and the second balancing resistor (R_{S2}) are arranged between the first switchable semiconductor (T₁) and the second switchable semiconductor (T₂), and wherein a second centre tap (6) is arranged between the first balancing resistor (R_{S1}) and the second balancing resistor (R_{S2}), and
- a first electrical connection (9) of the first centre tap (4) in the first circuit path (3) to the second centre tap (6) in the second circuit path (5),
**characterised in that**
- in a third circuit path (7), a first voltage divider resistor (R₁), a voltage stabilisation element (8) and a second voltage divider resistor (R₂) are connected in series between the potentials (DC+, DC-),
- the first voltage divider resistor (R₁) is at the first potential (DC+), the second voltage divider resistor (R₂) is at the second potential (DC-) and the voltage stabilisation element (8) is arranged between the voltage divider resistors (R₁, R₂),
- a first terminal (10) is arranged between the first voltage divider resistor (R₁) and the voltage stabilisation element (8) and a second terminal (11) is arranged between the second voltage divider resistor (R₂) and the voltage stabilisation element (8),
- a second electrical connection (12) is arranged between the first gate terminal (G₁) of the first switchable semiconductor (T₁) and the first terminal (10), and a third electrical connection (13) is arranged between the further gate terminal (G₂) of the second switchable semiconductor (T₂) and the second terminal (11), - a switch element (S) is arranged in a fourth electrical connection (15) between the first terminal (10) and the second terminal (11), parallel to the voltage stabilisation element (8) and
- the voltage stabilisation element (8) in the third circuit path (5) is a Zener diode (Z).

2. Circuit (1) according to claim 1,
wherein a first gate terminal (G₁) of the first switchable semiconductor (T₁) and a further gate terminal (G₂) of the second switchable semiconductor (T₂), respectively, dependent on a first leakage current (I_{L1}) at the first capacitor (C₁) or a second leakage current (I_{L2}) at the second capacitor (C₂) is controllable such that, by means of the first switchable semiconductor (T₁) and the first balancing resistor (R_{S1}), a first capacitor charging current (I₁) is impressable into the second capacitor (C₂) for compensation of the second leakage current (I_{L2}) and by means of the second switchable semiconductor (T₂) and the second balancing resistor (R_{S2}), a second capacitor charging current (I₂) is impressable into the first capacitor (C₁) for compensation of the first leakage current (I_{L1}).

3. Circuit (1) according to one of claims 1 or 2,
wherein the switch element (S) is an electronic switch (ES).

4. Circuit (1) according to claim 3,
wherein the electronic switch (ES) is an optocoupler (14).

5. Circuit (1) according to one of the preceding claims,
wherein the balancing (SY) of the capacitor voltages (U_{C1}, U_{C2}) at the capacitors (C₁, C₂) of the DC circuit (2) is executable in normal operation (NB) if the switch element (S) is closed, or wherein an active symmetrical discharging (AE) of the capacitors (C₁, C₂) for a switch-off mode (AM) of the DC circuit (2) is executable if the switch element (S) is open.

6. Circuit (1) according to one of the preceding claims,
wherein the voltage divider resistors (R₁, R₂) in the third circuit path (5) are high-valued resistors (16).

7. Circuit (1) according to one of the preceding claims,
wherein the capacitors (C₁, C₂) in the first circuit path (3) are electrolytic capacitors (19).

8. Circuit (1) according to one of the preceding claims,
wherein the balancing resistors (R_{S1}, R_{S2}) in the second circuit path (5) are configured as low-valued resistors (17).

9. Circuit (1) according to one of the preceding claims,
wherein the switchable semiconductors (T₁, T₂) in the second circuit path (5) are MOSFETs (18).

10. Method for balancing (SY) and active symmetrical discharging (AE) for a circuit (1) according to one of claims 1 to 9,
wherein
- by means of a switch element (S), an operating mode selection (A) is made in the circuit (1),
- the balancing (SY) of the capacitor voltages (U_{C1}, U_{C2}) at the capacitors (C₁, C₂) of the DC circuit (2) for normal operation (NB) is selected if the switch element (S) is electrically closed, or
- the active symmetrical discharging (AE) of the capacitors (C₁, C₂) of the DC circuit (2) for a switch-off mode (AM) is selected if the switch element (S) is electrically open.

11. Method (V) according to claim 10,
wherein for normal operation (NB) with the switch element (S) closed
- the first capacitor voltage (U_{C1}) of the first capacitor (C₁) is larger than the second capacitor voltage (U_{C2}) of the second capacitor (C₂).
- by means of a first voltage divider resistor (R₁), a first gate terminal (G₁) is controlled such that a first switchable semiconductor (T₁) closes,
- by means of a second voltage divider resistor (R₂), a further gate terminal (G₂) is controlled such that a second switchable semiconductor (T₂) opens, and
- a first capacitor charging current (I₁) flows through the first balancing resistor (R_{S1}) for compensation of a second leakage current (I_{L2}) at the second capacitor (C₂) until a first gate-source voltage (U_{GS1}) at the first switchable semiconductor (T₁) reaches or undershoots a first threshold voltage (U_{TH1}), and the first switchable semiconductor (T₁) opens.

12. Method (V) according to claim 10,
wherein for normal operation (NB) with the switch element (S) closed
- the first capacitor voltage (U_{C1}) of the first capacitor (C₁) is smaller than the second capacitor voltage (U_{C2}) of the second capacitor (C₂),
- by means of a second voltage divider resistor (R₂), a further gate terminal (G₂) is controlled such that a second switchable semiconductor (T₂) closes,
- by means of a first voltage divider resistor (R₁), a first gate terminal (G₁) is controlled such that a first switchable semiconductor (T₁) opens, and
- a second capacitor charging current (I₂) flows through a second balancing resistor (R_{S2}) for compensation of a first leakage current (I_{L1}) at the first capacitor (C₁) until a further gate-source voltage (U_{GS2}) at the second switchable semiconductor (T₂) reaches or undershoots a further threshold voltage (U_{TH2}) and the second switchable semiconductor (T₂) opens.

13. Method (V) according to claim 10,
wherein for the switch-off mode (AM) with the switch element (S) open
- by means of a voltage stabilisation element (8), a first voltage divider resistor (R₁), and a second voltage divider resistor (R₂), respectively a first gate terminal (G₁) of a first switchable semiconductor (T₁) and a further gate terminal (G₂) of a second switchable semiconductor (T₂) are controlled such that both switchable semiconductors (T₁, T₂) are closed, and
- the capacitors (C₁, C₂) are discharged symmetrically via the second circuit path (5) until a first gate-source voltage (U_{GS1}) at the first switchable semiconductor (T₁) reaches or undershoots a first threshold voltage (U_{TH1}) and/or a further gate-source voltage (U_{GS2}) at the second switchable semiconductor (T₂) reaches or undershoots a further threshold voltage (U_{TH2}), respectively, and the switchable semiconductors (T₁, T₂) are opened.

## Revendications

1. Montage (1) d'équilibrage (SY) de tensions (U_{C1}, U_{C2}) de condensateurs (C₁, C₂) dans un circuit (2) à tension continue, comportant
- un premier trajet (3) de circuit, ayant au moins un premier condensateur (C₁) et un deuxième condensateur (C₂), qui sont montés en série entre un premier potentiel (DC+) et un deuxième potentiel (DC-) d'une tension (DC) continue du circuit (2) à tension continue, dans lequel, entre le premier condensateur (C₁) et le deuxième condensateur C₂), est constituée une première borne (4) médiane,
- un deuxième trajet (5) de circuit, ayant un premier semi-conducteur (T₁) pouvant être commuté, une première résistance (R_{S1}) d'équilibrage, une deuxième résistance (R_{S2}) d'équilibrage et un deuxième semi-conducteur (T₂) pouvant être commuté, qui sont montés en série entre les potentiels (DC+, DC-), dans lequel le premier semi-conducteur (T₁) pouvant être commuté est monté sur le premier potentiel (DC+) et le deuxième semi-conducteur (T₂) pouvant être commuté sur le deuxième potentiel (DC-), dans lequel la première résistance (Rₛ₁) d'équilibrage et la deuxième résistance (Rₛ₂) d'équilibrage sont montées entre le premier semi-conducteur (T₁) pouvant être commuté et le deuxième semi-conducteur (T₂) pouvant être commuté et dans lequel entre la première la première résistance (Rₛ₁) d'équilibrage et la deuxième résistance (Rₛ₂) d'équilibrage est constituée une deuxième borne (6) médiane et
- une première liaison (9) électrique de la première borne (4) médiane du premier trajet (3) de circuit à la deuxième borne (6) médiane du deuxième trajet (6) de circuit,
**caractérisé en ce que**
- dans un troisième trajet (7) de circuit, une première résistance (R₁) formant diviseur de tension, un élément (8) de stabilisation de la tension et une deuxième résistance (R₂) formant diviseur de tension sont montés en série entre les potentiels (DC+, DC-),
- la première résistance (R₁) formant diviseur de tension est montée sur le premier potentiel (DC+), la deuxième résistance (R₂) formant diviseur de tension sur le deuxième potentiel (DC-) et l'élément (8) de stabilisation de la tension entre les résistances (R₁, R₂) formant diviseur de tension,
- entre la première résistance (R₁) formant diviseur de tension et l'élément (8) de stabilisation de la tension est constituée une première borne (10), ainsi qu'entre la deuxième résistance (R₂) formant diviseur de tension et l'élément (8) de stabilisation de la tension une deuxième borne (11),
- une deuxième liaison (12) électrique est réalisée entre la première borne (G₁) de grille du premier semi-conducteur (T₁) pouvant être commandé et la première borne (10), ainsi qu'une troisième liaison (13) électrique entre l'autre borne (G₂) de grille du deuxième semi-conducteur (T₂) pouvant être commuté et la deuxième borne (11),
- un élément (S) d'interruption est monté dans une quatrième liaison (15) électrique, entre la première borne (10) et la deuxième borne (11), en parallèle à l'élément (8) de stabilisation de la tension et
- l'élément (8) de stabilisation de la tension, dans le troisième trajet (5) de circuit, est une diode Z (Z).

2. Montage (1) suivant la revendication 1,
dans lequel une première borne (G₁) de grille du premier semi-conducteur (T₁) pouvant être commuté et une autre borne (G₂) de grille du deuxième semi-conducteur (T₂) pouvant être commuté peuvent chacune être commandée en fonction d'un premier courant (I_{L1}) de fuite sur le premier condensateur (C₁) ou d'un deuxième courant (I_{L2}) de fuite sur le deuxième condensateur (C₂), de manière à pouvoir, au moyen du premier semi-conducteur (T₁) pouvant être commandé et de la première résistance (Rₛ₁) d'équilibrage, injecter un premier courant (I₁) de charge de condensateur dans le deuxième condensateur (C₂) pour compenser le deuxième courant (I_{L2}) de fuite et, au moyen du deuxième semi-conducteur (T₂) pouvant être commandé et de la deuxième résistance (Rₛ₂) d'équilibrage, un deuxième courant (I₂) de charge de condensateur dans le premier condensateur (C₁) pour compenser le premier courant (I_{L1}) de fuite.

3. Montage (1) suivant l'une des revendications 1 ou 2,
dans lequel l'élément (S) d'interruption est un interrupteur (ES) électronique.

4. Montage (1) suivant la revendication 3,
dans lequel l'interrupteur (ES) électronique est un optocoupleur (14).

5. Montage (1) suivant l'une des revendications précédentes,
dans lequel l'équilibrage (SY) des tensions (U_{c1}, U_{c2}) de condensateur sur les condensateurs (C₁, C₂) du circuit (2) à tension continue peut s'effectuer en fonctionnement (NB) normal, si l'élément (S) d'interruption est fermé, ou dans lequel une décharge (AE) d'équilibrage active des condensateurs (C₁, C₂) peut être effectuée pour un mode (AM) d'interruption du circuit (2) de tension continue, si l'élément (S) d'interruption est ouvert.

6. Montage (1) suivant l'une des revendications précédentes, dans lequel les résistances (R₁, R₂) formant diviseur de tension du troisième trajet (5) de circuit sont des résistances (16) de grande valeur ohmique.

7. Montage (1) suivant l'une des revendications précédentes, dans lequel les condensateurs (C₁, C₂) du premier trajet (3) de circuit sont des condensateurs (19) électrolytiques.

8. Montage (1) suivant l'une des revendications précédentes dans lequel les résistances (Rₛ₁, Rₛ₂) d'équilibrage du deuxième trajet (5) de circuit sont des résistances (17) à petite valeur ohmique.

9. Montage (1) suivant l'une des revendications précédentes, dans lequel les semi-conducteurs (T₁, T₂) pouvant être commutés du deuxième trajet (5) de circuit sont des MOSFETs (18).

10. Procédé d'équilibrage (SY) et de décharge d'équilibrage active d'un montage (1) suivant l'une des revendications 1 à 9,
dans lequel
- au moyen d'un élément (S) d'interruption, on choisit (A) un fonctionnement sur le montage (1),
- on choisit l'équilibrage (SY) des tensions (U_{c1}, U_{c2}) sur les condensateurs (C₁, C₂) du circuit (2) à tension continue pour le fonctionnement (NB) normal, si l'élément (S) de l'interruption est fermé électriquement ou
- la décharge (AE) symétrique active des condensateurs (C₁, C₂) du circuit (2) à tension continue est choisie pour un mode (AM) d'interruption, si l'élément (S) d'interruption est ouvert électriquement.

11. Procédé (V) suivant la revendication 10,
dans lequel, pour le fonctionnement (NB) normal alors que l'élément (S) d'interruption est fermé
- la première tension (U_{c1}) du premier condensateur (C₁ ) est plus haute que la deuxième tension (UC₂) du deuxième condensateur (C₂),
- au moyen d'une première résistance (R₁) formant diviseur de tension, on commande une première borne (G₁) de grille, de manière à fermer un premier semi-conducteur (T₁) pouvant être commuté,
- au moyen d'une deuxième résistance (R₂) formant diviseur de tension, on commande une autre borne (G₂) de grille, de manière à ouvrir un deuxième semi-conducteur (T₂) pouvant être commuté et
- un premier courant (I₁) de charge de condensateur passe dans la première résistance (R_{S1}) d'équilibrage pour compenser un deuxième courant (I_{L2}) de fuite sur le deuxième condensateur (C₂), jusqu'à ce qu'une première tension (U_{GS1}) grille-source du premier semi-conducteur (T₁ ) pouvant être commuté atteigne une première tension (U_{TH}1) de seuil ou lui devienne inférieure et ouvre le premier semi-conducteur (T₁) pouvant être commuté.

12. Procédé (V) suivant la revendication 10,
dans lequel, pour le fonctionnement (NB) normal, alors que l'élément (S) d'interruption est fermé
- la première tension (U_{C1}) du premier condensateur (C₁) est plus basse que la deuxième tension (U_{C2}) du deuxième condensateur (C₂),
- au moyen d'une deuxième résistance (R₂) formant diviseur de tension, on commande une autre borne (G₂) de grille, de manière à fermer un deuxième semi-conducteur (T₂) pouvant être commuté,
- au moyen d'une première résistance (R₁) formant diviseur de tension, on commande une première borne (G₁) de grille, de manière à ouvrir un premier semi-conducteur (T₁) pouvant être commuté et
- un deuxième courant (I₂) de charge de condensateur passe par une deuxième résistance (R_{S2}) d'équilibrage pour compenser un premier courant (I_{L1}) de fuite sur le premier condensateur (C₁), jusqu'à ce qu'une autre tension (U_{GS2}) de grille-source du deuxième semi-conducteur (T₂) pouvant être commuté atteigne une autre tension (U_{TH2}) de seuil ou lui devienne inférieure et ouvre le deuxième semi-conducteur T₂ pouvant être commuté.

13. Procédé (V) suivant la revendication 10,
dans lequel, pour le mode (AM) d'interruption, alors que l'élément (S) d'interruption est ouvert
- au moyen d'un élément (8) de stabilisation de la tension, d'une première résistance (R₁) formant diviseur de tension et d'une deuxième résistance (R₂) formant diviseur de tension, on commande, respectivement, une première borne (G₁) de grille d'un premier semi-conducteur (T₁) pouvant être commuté et une autre borne (G₂) de grille d'un deuxième semi-conducteur (T₂) pouvant être commuté, de manière à fermer les deux semi-conducteurs (T₁, T₂) pouvant être commutés et
- on décharge les condensateurs (C₁, C₂) symétriquement par le deuxième trajet (5) de circuit, jusqu'à ce qu'une première tension (U_{GS1}) de grille-source du premier semi-conducteur (T₁) pouvant être commuté atteigne une première tension (U_{TH1}) de seuil et/ou lui devienne inférieure et/ou jusqu'à ce qu'une autre tension (U_{GS2}) de grille-source du deuxième semi-conducteur (T₂) pouvant être commuté atteigne une autre tension (U_{TH2}) de seuil ou lui soit inférieure et on ouvre les semi-conducteurs (T₁, T₂) pouvant être commutés.
